# EUROPÄISCHE PATENTSCHRIFT

(11) **EP 2 332 682 B1**
(45) Veröffentlichungstag und Bekanntmachung des Hinweises auf die Patenterteilung: **29.05.2013**
(21) Anmeldenummer: 10014855.0
(22) Anmeldetag: 23.11.2010
(51) Int. Cl.: B23D 17/06, B23D 31/00, E02F 3/96, E04G 23/08

(54) **Verfahren zur Ansteuerung einer hydraulischen Anbauvorrichtung sowie eine hydraulische Anbauvorrichtung, insbesondere für den Abbruch, die Zerkleinerung oder das Recycling**
Method for controlling a hydraulic add-on device and hydraulic add-on device, in particular for breaking, crushing or recycling
Procédé de commande d'un dispositif de montage hydraulique et dispositif de montage hydraulique, notamment pour la rupture, le broyage ou le recyclage

(30) Priorität: 10.12.2009 DE 102009057507; 10.06.2010 DE 102010023308
(43) Veröffentlichungstag der Anmeldung: 15.06.2011
(73) Patentinhaber: Kiesel, Toni, 88212 Ravensburg (DE)
(72) Erfinder: Gmelin, Wolfgang, 76684 Östringen (DE)
(74) Vertreter: Maser, Jochen

(56) Entgegenhaltungen:
- EP-A1- 2 033 730
- DE-A1- 4 201 352
- DE-A1- 19 601 735
- NL-A- 9 001 321

## Beschreibung

Die Erfindung betrifft ein Verfahren zur Ansteuerung einer Öffnungs- und einer Schließbewegung einer hydraulischen Anbauvorrichtung zum Scheren oder Zermalmen von Strukturen sowie eine hydraulische Anbauvorrichtung, insbesondere für den Abbruch, für die Zerkleinerung oder das Recycling, mit den Merkmalen des Oberbegriffs der Ansprüche 1 und 4. Solche Merkmale sind aus dem NL 9001 321 A1 bekannt.

Aus der DE 600 21 539 T2 ist eine gattungsgemäße Anbauvorrichtung bekannt, welche an einem Ausleger und an einem hydraulischen System eines Trägergerätes, wie beispielsweise eines Kompaktladers oder Baggers, anschließbar ist. Hierfür ist an einem Gehäuse der Anbauvorrichtung eine Anschlussschnittstelle vorgesehen, um einerseits das Gehäuse der Anbauvorrichtung an dem Ausleger, insbesondere austauschbar, zu fixieren und andererseits das hydraulische System des Trägergerätes mit hydraulischen Druckleitungen bzw. mit einem Zulauf und einem Ablauf der Anbauvorrichtung zu verbinden. An dem Gehäuse ist eine feststehende untere Backe bzw. ein feststehender Unterkiefer und eine schwenkbar dazu angeordnete obere Backe bzw. ein schwenkbarer Oberkiefer vorgesehen, wobei die obere Backe um eine am Gehäuse angeordnete Lagerachse schwenkbar angeordnet ist. Diese schwenkbare Backe wird mit einem einzigen Hubzylinder angetrieben, so dass die Backe aus einer Öffnungsposition durch eine Schließbewegung in eine Schneidposition und weiter in eine Schließposition und anschließend durch eine Öffnungsbewegung wieder zurück in eine Öffnungsposition übergeführt werden kann. Dabei greift der Hubzylinder, insbesondere dessen Kolbenstange, an der schwenkbaren Backe an. Gegenüberliegend ist der Hubzylinder am Gehäuse schwenkbeweglich, jedoch ortsfest, gelagert.

Solche hydraulische Anbauvorrichtungen werden dafür verwendet, um Strukturen, wie beispielsweise Schrott, zu verarbeiten. Dabei kann sowohl Eisen als auch Nichteisenmetall zerkleinert werden. Derartiger Schrott kann in vielen verschiedenen Formen vorliegen. Beispielsweise können dies Schiffe, Bohrinseln oder dergleichen sein. Ebenso können es auch einzelne metallische Bestandteile sein, wie beispielsweise Träger, Kanäle, Röhren oder dergleichen. Des Weiteren können solche Anbauvorrichtungen zur Bearbeitung von Strukturen wie beispielsweise Gebäude, Autobahnen oder dergleichen eingesetzt werden, wobei dabei ein Straßenbelag, insbesondere aus Beton, oder sonstige Bauwerksteile aus Beton zermalmt werden.

Die Anordnung des Hubzylinders sowie die Ausgestaltung der schwenkbaren Backe und deren Lagerung am Gehäuse erfolgt derart, dass mit zunehmender Schließbewegung der schwenkbaren Backe eine zunehmende Druckkraft aufgebaut werden kann, wobei die Druckkraft am stärksten ist, sobald eine Spitze der bewegbaren Backe auf gleicher Höhe oder geringfügig gegenüber einer Spitze einer gegenüberliegenden Backe positioniert ist.

Aus der NL 9 001 321 A1 ist ein Verfahren zur Ansteuerung einer hydraulischen Anbauvorrichtung zum Scheren und Zermalmen von Strukturen bekannt, bei der die schwenkbare Backe durch einen ersten Hubzylinder und einen zweiten Hubzylinder angetrieben wird, wobei die jeweiligen Angriffspunkte des ersten und zweiten Hubzylinder einander gegenüberliegend zur Lagerachse der schwenkbaren Backe angeordnet sind. Zur Ansteuerung einer Öffnungs- oder Schließbewegung werden beide Hubzylinder gleichzeitig mit Druck beaufschlagt. Da der erste Hubzylinder links der Schwenkachse und der zweite Hubzylinder rechts der Schwenkachse an der Backe angreift, werden diese bei einer Öffnungs- oder Schließbewegung gegenläufig angesteuert.

Aus der DE 42 01 352 A1 geht eine Schneidvorrichtung zum Zerlegen von asbesthaltigen Rolltoren oder dergleichen hervor. Diese Schneidvorrichtung umfasst eine schwenkbare Backe mit zwei daran angreifenden Hubzylindern, die parallel ausgerichtet sind und der Scherleiste zugeordnet an der schwenkbaren Backe angreifen.

Die Anforderungen an solche hydraulischen Anbaugeräte steigen stetig an. Insbesondere sollen bei gleichbleibenden Baugrößen erhöhte Druckkräfte, insbesondere Schneid- und/oder Zermalmkräfte, erzeugt werden können. Dies beruht zum einen darauf, dass für diese hydraulischen Anbaugeräte, welche selbst in einer kleinen Ausführungsform ein Gewicht von wenigstens 200 kg aufweisen, die bisherige Baugröße erhalten bleibt, um eine schnelle Handhabung zu ermöglichen. Darüber hinaus sollen größere Strukturen und dickere Wandstärken bei gleicher Baugröße zerkleinert, abgeschert oder zermalmt werden. Insbesondere bei der Zerkleinerung von Rohren tritt das Problem auf, dass diese bei einer maximalen Öffnungsposition gerade von einer Maulöffnung umgriffen werden können, jedoch die anfängliche Schneidkraft zu gering ist, so dass solche Rohre oftmals nicht geschnitten werden können und eine größere Anbauvorrichtung erforderlich ist. Darüber hinaus weisen solche Anbauvorrichtungen den Nachteil auf, dass eine sehr niedrige Öffnungs- und Schließgeschwindigkeit der schwenkbaren Backe gegeben ist, welche durch das hohe Rücklaufvolumen zwischen Druckkolbenfläche und Kolbenstangenfläche des Hubzylinders verursacht wird. Dadurch ist eine erhöhte Zykluszeit eines Schneidvorganges gegeben.

Der Erfindung liegt deshalb die Aufgabe zugrunde, ein Verfahren zur Ansteuerung einer hydraulischen Anbauvorrichtung sowie eine hydraulische Anbauvorrichtung zum Scheren oder Zermalmen von Strukturen, insbesondere für den Abbruch, die Zerkleinerung oder für das Recycling vorzuschlagen, so dass zu Beginn einer Schließbewegung von zumindest einer schwenkbaren Backe in einer ersten Schließphase eine erhöhte Geschwindigkeit und in einer weiteren Schließphase eine erhöhte Schneidkraft erzielt wird und darüber hinaus verkürzte Zykluszeiten während einer Öffnungs- und Schließbewegung der zumindest einen schwenkbaren Backe in eine Öffnungs- und Schneid- und/oder Schließposition ermöglicht werden.

Diese Aufgabe wird erfindungsgemäß durch ein Verfahren mit den Merkmalen des Anspruchs 1, und zwar mit einem Verfahren zur Ansteuerung einer hydraulischen Anbauvorrichtung mit einer oberen und einer unteren Backe, von welcher zumindest eine Backe schwenkbar an einer Lagerachse am Gehäuse gelagert ist, gelöst, bei dem die schwenkbare Backe durch einen ersten und zumindest einen weiteren daran angreifenden Hubzylinder aus einer Öffnungs- in eine Schneid- und/oder eine Schließposition und zurück bewegbar angesteuert wird und der erste und zumindest eine weitere Hubzylinder mit einem voneinander abweichenden Hebelarm zur Krafteileitung an der schwenkbaren Backe angreifen, wobei für eine Schließbewegung der zumindest einen schwenkbaren Backe zunächst nur derjenige Hubzylinder angesteuert wird, der in einer ersten Schließphase eine höhere Schließgeschwindigkeit und/oder einen größeren Hebelarm als der zumindest eine weitere Hubzylinder aufweist und in einer weiteren Schließbewegung, bei welcher eine Druckkrafterhöhung erfolgt, der zumindest eine weitere Hubzylinder zugeschalten und angesteuert wird, so dass zu diesem Zeitpunkt der Schließbewegung eine erhöhte Schneidkraft erzeugt wird. Diese Anordnung weist den Vorteil auf, dass bis zur tatsächlichen Aufbringung der erforderlichen Schneidkraft eine schnelle Zuführbewegung oder Schließbewegung erfolgen kann und zu dem Zeitpunkt, an dem die erhöhte Schneidkraft erforderlich ist, eine solche erzeugt wird.

Des Weiteren ist bevorzugt vorgesehen, dass der oder die an der zumindest einen schwenkbaren Backe angreifenden Hubzylinder für eine Öffnungs- und/oder Schließbewegung über zumindest ein Ventil einer hydraulischen Steuereinrichtung angesteuert werden. Durch ein solches Ventil kann auch eine schnellere Verfahrgeschwindigkeit der schwenkbaren Backe erzielt werden. Ebenso kann ein flexibles und schnelle Zu- und Abschalten der einzelnen Hubzylinder ermöglicht werden.

Eine weitere bevorzugte Ausgestaltung des Verfahrens sieht vor, dass der zumindest eine weitere Hubzylinder während einer Schließbewegung der schwenkbaren Backe als Dämpfungszylinder angesteuert wird, der dem zumindest einen, die Schließbewegung durchführenden Hubzylinder entgegenwirkt. Während eines Schneidvorganges, insbesondere bei einem Gussmaterial oder gehärteten Material, erfolgt ein schlagartiger Bruch, der eine schnelle Entlastung des zumindest einen angesteuerten Hubzylinders bewirkt. Dies kann dazu führen, dass Dichtungen des Hubzylinders, wie Kolbendichtungen und Kolbenstangendichtungen, beschädigt werden können. Um dies zu vermeiden, wird bevorzugt zumindest ein weiterer Hubzylinder als Dämpfungszylinder betrieben, der mit entgegengesetzter Druckkraft zum die Schneidbewegung durchführenden Hubzylinder angesteuert wird, um diese schlagartige Entlastung abzudämpfen und dieser entgegenzuwirken. Dies weist den Vorteil auf, dass bei solchen schlagartigen Entlastungen entstehende Beschädigungen an der Dichtung der Hubzylinder vermieden werden können.

Die der Erfindung zugrundeliegende Aufgabe wird durch eine hydraulische Anbauvorrichtung mit den Merkmalen des Anspruchs 4, und zwar durch eine Anbauvorrichtung zum Scheren oder Zermalmen von Strukturen, insbesondere für den Abbruch, für die Zerkleinerung oder für das Recycling gelöst, bei der an zumindest einer schwenkbaren Backe, die um eine an einem Gehäuse gelagerte Lagerachse schwenkbar angeordnet ist, ein erster Hubzylinder und zumindest ein weiterer Hubzylinder daran angreift, wobei die zumindest zwei an der schwenkbaren Backe angreifenden Hubzylinder mit einem voneinander abweichenden Hebelarm an der schwenkbaren Backe angreifen und wobei die Angriffspunkte der Hubzylinder bezogen auf die Lagerachse der Maulöffnung gegenüberliegend an der schwenkbaren Backe angeordnet sind. Dadurch kann insbesondere während einer Schneidbewegung oder Schließbewegung der Anbauvorrichtung eine Krafterhöhung erzielt werden, so dass bspw. bei einem ersten Hubzylinder, bei welchem sich mit zunehmender Schließbewegung der Hebelarm verringert, der zumindest eine weitere Hubzylinder die erforderliche Schneid- oder Schließkraft aufbringen kann, da der Hebelarm in diesem Bereich größer wird oder maximal ist. Somit ist eine Auslegung hinsichtlich der Arbeitsgeschwindigkeit und der Kraftaufbringung ermöglicht.

Eine weitere bevorzugte Ausgestaltung der Erfindung sieht vor, dass die jeweiligen Angriffspunkte der Hubzylinder an der schwenkbaren Backe im Abstand zur Lagerachse der schwenkbaren Backe voneinander abweichen. Diese Ausgestaltung weist des Weiteren den Vorteil auf, dass durch die Verwendung von wenigstens zwei Hubzylindern eine Kraftaufteilung bei der Krafteinleitung in die schwenkbare Backe erfolgt. Somit kann gegenüber einem Einzelhubzylinder zwar jeweils eine geringere Einzelhubzylinderkraft erzielt werden, die auf die schwenkbare Backe und das Gehäuse wirkt, jedoch kann dadurch eine bessere Kraftverteilung und/oder Krafteinleitung im Gehäuse der Anbauvorrichtung und/oder in der schwenkbaren Backe und/oder ein besserer Kraftverlauf während der Schließbewegung erzielt werden. Bei dieser Anordnung kann vorgesehen sein, dass die jeweils der schwenkbaren Backe gegenüberliegenden Angriffspunkte der Hubzylinder wiederum an einer schwenkbaren Backe angeordnet sind oder an einem Gehäuse. Dabei kann alternativ vorgesehen sein, dass diese Angriffspunkte getrennt oder an einem gemeinsamen Angriffspunkt liegen. Dies ermöglicht des Weiteren in einfacher Weise die Positionierung des zumindest einen weiteren Hubzylinders zum ersten Hubzylinder unter Beibehaltung der Schwenkbeweglichkeit der schwenkbaren Backe. Darüber hinaus können dadurch gezielt verschieden große Schließkräfte über den Verlauf einer Schließbewegung der schwenkbaren Backe erzielt werden, so dass der Schneidkraftverlauf über den Schneidbereich entsprechend ausgelegt werden kann.

Nach einer bevorzugten Ausgestaltung der Erfindung ist vorgesehen, dass an der schwenkbaren Backe zumindest ein weiter Hubzylinder angreift, dessen Längsachse in einem zur Längsache des ersten Hubzylinders abweichenden Anstellwinkel angeordnet ist. Diese Anordnung weist den Vorteil auf, dass die zumindest zwei an der schwenkbaren Backe angreifenden Hubzylinder aufgrund deren verschiedenen Anstellwinkel unterschiedliche Hebelarme aufweisen und somit unterschiedliche Anfangsschneidkräfte erzeugen, wobei insbesondere vorgesehen ist, dass bereits zu Beginn einer Schließbewegung aus einer Öffnungsposition eine erhöhte Schneidkraft erzeugt wird. Im weiteren Verlauf der Schließbewegung verändert sich aufgrund des unterschiedlichen Anstellwinkels laufend die jeweils auf die schwenkbare Backe wirkende Druckkraft der Hubzylinder zur Erzeugung der Schneidkraft, wobei die Hubzylinder derart zusammen wirken, dass ein gleichmäßig hoher Kraftverlauf der Schneidkraft über den kompletten Schneidbereich, insbesondere zwischen einer Öffnungsposition und einer Schließposition, erzielt wird.

Eine alternative bevorzugte Ausgestaltung der Erfindung sieht vor, dass der Angriffspunkt des zumindest einen weiteren Hubzylinders in dem Angriffspunkt des ersten Hubzylinders liegt. Dadurch kann zumeist der Anstellwinkel der Hubzylinder zueinander vergrößert und eine zentrale Krafteinleitung an der Backe erzielt werden. Nach einer alternativen Ausgestaltung der Erfindung ist vorgesehen, dass die Längsachse des ersten Hubzylinders und die Längsachse des zumindest einen weiteren Hubzylinders, welche beide an der schwenkbaren Backe an unterschiedlichen Angriffspunkten angreifen, parallel zueinander ausgerichtet sind. Auch diese alternative Ausrichtung der Hubzylinder mit dem Abstand zur Lagerachse voneinander abweichenden Angriffspunkten an der schwenkbaren Backe, ermöglichen analoge Vorteile wie die Anordnung der Hubzylinder bezüglich deren Längsachse in voneinander verschiedenen Anstellwinkel.

Insbesondere ist dabei vorgesehen, dass zu Beginn einer Schließbewegung der zumindest einen schwenkbaren Backe eine Schneidkrafterhöhung erzeugt wird. Durch die Anordnung von zumindest zwei Hubzylindern, die mit verschiedenen Anstellwinkeln an der schwenkbaren Backe angreifen, wird eine Schneidkrafterhöhung zu Beginn einer Schließbewegung der schwenkbaren Backe um beispielsweise bis zu 50 % erzielt.

Eine weitere bevorzugte Ausgestaltung der Erfindung sieht vor, dass der erste und zumindest eine weitere Hubzylinder sich am Gehäuse abstützen bzw. gegengelagert sind. Dadurch kann ein einfacher konstruktiver Aufbau gegeben sein. Dies führt zumeist auch dazu, dass Hubzylinder mit unterschiedlichen Längen eingesetzt werden, wobei durch die Ansteuerung der Schwenkbewegung durch wenigstens zwei Hubzylinder grundsätzlich kleinere Hubzylinder einsetzbar sind als dies beim Stand der Technik der Fall ist. Die Verwendung von kleineren Hubzylindern weist den Vorteil auf, dass diese bei gleicher Einbaulänge einen größeren Hub aufweisen, da diese ein geringeres Totmaß haben. Das Totmaß eines Hubzylinders bestimmt sich aus der Differenz zwischen der Gesamtlänge des Hubzylinders und dessen Hublänge. Darüber hinaus weist die Verwendung von kleineren Hubzylindern den Vorteil auf, dass eine höhere Arbeitsgeschwindigkeit ermöglicht ist und dass darüber hinaus eine kleinere Massenträgheit besteht.

Des Weiteren ist bevorzugt vorgesehen, dass der erste und zumindest eine weitere Hubzylinder mit den jeweiligen Kolbenstangen an der schwenkbaren Backe angreifen. Dadurch kann ein bauraumoptimierter Einsatz erzielt werden. Alternativ kann auch vorgesehen sein, dass das Gehäuse der Hubzylinder an der schwenkbaren Backe angeordnet ist. In besonderen Fällen können die Hubzylinder auch gegensinnig ausgerichtet sein.

Bei einer weiteren bevorzugten Ausgestaltung der hydraulischen Anbauvorrichtung weist der erste Hubzylinder bei einer Öffnungsposition der schwenkbaren Backe einen größeren Hebelarm auf als der zumindest eine weitere Hubzylinder. Durch die Anordnung von zumindest einem weiteren Hubzylinder kann der erste Hubzylinder in einem günstigeren Hebelarmverhältnis angeordnet werden als dies bei der Verwendung von nur einem einzigen Hubzylinder der Fall ist. Dadurch und durch das Hinzufügen von zumindest einem weiteren Hubzylinder wird insbesondere zu Beginn der Schneidbewegung eine erhöhte Schneidkraft zumindest zu Beginn der Schließbewegung der zumindest einen Backe erzielt.

Eine weitere bevorzugte Ausgestaltung der Erfindung sieht vor, dass die an der schwenkbaren Backe angreifenden Hubzylinder parallel mit Druck beaufschlagbar sind. Dabei wird insbesondere eine hydraulische Steuereinrichtung eingesetzt, von der aus eine kolbenseitige und eine kolbenstangenseitige Verbindungsleitung zum jeweiligen Hubzylinder geführt sind. Durch die parallele Beaufschlagung der an der schwenkbaren Backe angreifenden Hubzylinder bedarf es keines zusätzlichen Steuerungsaufwandes. Die angesteuerten Hubzylinder behindern sich während einer Schließbewegung oder einer Öffnungsbewegung der zumindest einen schwenkbaren Backe gegenseitig nicht.

Des Weiteren ist bevorzugt vorgesehen, dass die Summe der Zylindervolumen der Hubzylinder, welche an der schwenkbaren Backe angreifen, kleiner oder gleich dem hydraulischen Fördervolumen des hydraulischen Systems ist. Dadurch kann eine maximale Druckbeaufschlagung der an der schwenkbaren Backe angreifenden Hubzylinder sichergestellt werden. Gleichzeitig können damit erhöhte Öffnungs- und Schließbewegungen der zumindest einen schwenkbaren Backe erzielt werden.

Des Weiteren ist vorgesehen, dass die an der schwenkbaren Backe angreifenden Hubzylinder unterschiedliche Kolbendurchmesser aufweisen. Dadurch kann eine hohe Flexibilität in der Auslegung des Schneidkraftverlaufs und zur Ansteuerung der Öffnungs- und Schließbewegung der zumindest einen Backe erzielt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figuren 1a und b: eine schematische Seitenansicht einer hydraulischen Anbauvorrichtung mit einer schwenkbaren Backe in einer Öffnungs- und einer Schließposition gemäß dem Stand der Technik,
- Figur 2a: eine schematische Seitenansicht einer erfindungsgemäßen hydraulischen Anbauvorrichtung mit einer schwenkbaren Backe in einer Öffnungsposition,
- Figur 2b: eine schematische Seitenansicht der Anbauvorrichtung gemäß Figur 2a mit einer schwenkbaren Backe in einer Schneidposition,
- Figur 2c: eine schematische Seitenansicht der Anbauvorrichtung gemäß Figur 2a in einer Schließposition und
- Figur 3: eine schematische Prinzipdarstellung einer hydraulischen Steuereinrichtung der Anbauvorrichtung.

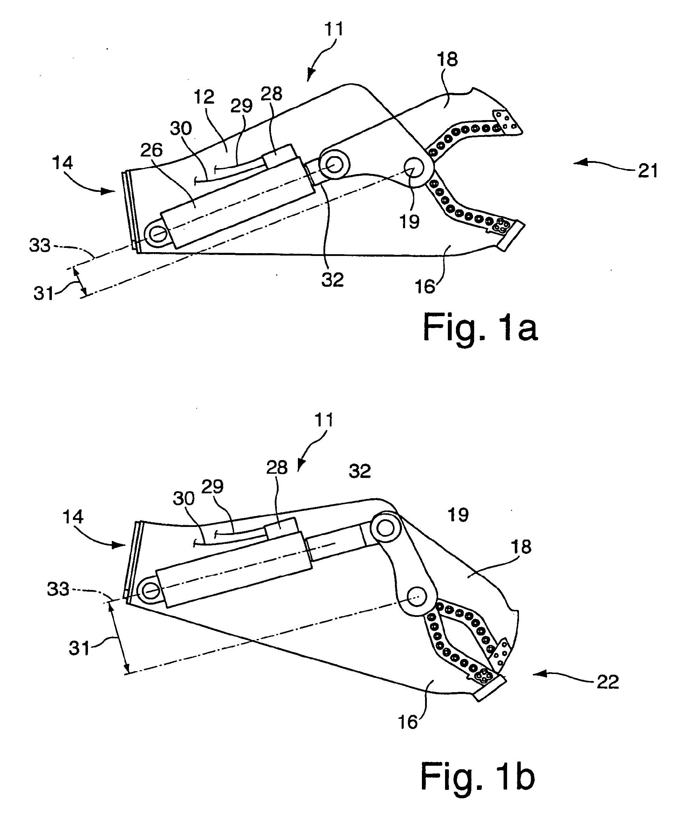

In den Figuren 1a und 1b ist eine hydraulische Anbauvorrichtung 11 dargestellt, welche aus der DE 600 21 539 T2 bekannt ist. Auf diese Druckschrift wird vollumfänglich Bezug genommen. Die hydraulische Anbauvorrichtung 11 umfasst ein Gehäuse 12 mit einer Anschlussschnittstelle 14, über welche diese hydraulische Anbauvorrichtung 11 an einem nicht näher dargestellten Ausleger und ein hydraulisches System eines nicht näher dargestellten Trägergerätes, zum Beispiel eines Kompaktladers oder Baggers, anschließbar und in einfacher Weise austauschbar ist. Das Gehäuse 12 umfasst eine feststehende untere Backe 16 bzw. einen feststehenden Unterkiefer sowie eine schwenkbare obere Backe 18 bzw. einen schwenkbaren Oberkiefer. Die obere Backe 18 ist um eine Lagerachse 19 schwenkbar, wobei die Lagerachse 19 ortsfest am Gehäuse 12 vorgesehen ist. Alternativ zu dieser beschriebenen Ausführungsform kann auch die untere Backe 16 in Analogie zur oberen Backe 18 schwenkbar um die Lagerachse 19 bewegbar sein.

Die obere und untere Backe 18, 16 sind mit einem Schneidwerkzeug 20 ausgestattet. Durch eine solche Anbauvorrichtung 11 kann insbesondere das Schneiden von Eisen und Nichteisenmetallen ermöglicht und somit zum Recyceln eingesetzt werden. Alternativ zum Schneidwerkzeug 20 können die obere und untere Backe auch ausschließlich mit Zermalmzähnen oder zusätzlich mit Zermalmzähnen versehen sein.

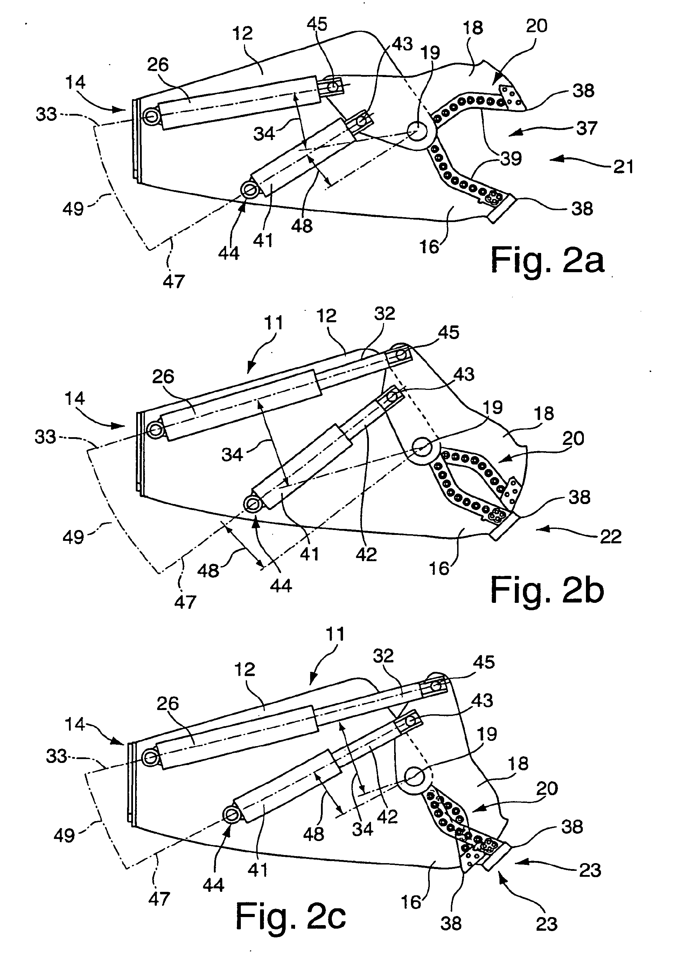

Zur Ansteuerung der oberen Backe 18 aus einer in Figur 1a dargestellten Öffnungsposition 21 in eine Schneidposition 22 gemäß Figur 1b oder einer Schließposition der oberen Backe 18 zur unteren Backe 16, wie diese beispielsweise in Figur 2c dargestellt ist, wird ein hydraulischer Hubzylinder 26 mit Druck beaufschlagt, wobei dieser hydraulische Hubzylinder 26 über eine hydraulische Steuerungseinrichtung 28 angesteuert wird. Diese Steuerungseinrichtung 28 wird mit einem Zulauf 29 von dem hydraulischen System versorgt. Die Hydraulikflüssigkeit wird über einen Ablauf 30 ausgehend von der Steuerungseinrichtung 28 in das hydraulische System zurückgeführt.

Zu Beginn einer Schließbewegung der oberen Backe 18 bzw. zum Einleiten einer Schneidphase wird der hydraulische Hubzylinder 26 mit Druck beaufschlagt, so dass eine Kolbenstange 32 entlang einer Längsachse 33 des Hubzylinders 26 ausgefahren wird. Aufgrund der schwenkbaren Anordnung der oberen Backe 18 um die Lagerachse 19 ergibt sich ein Hebelarm 31, der zu Beginn der Schneidphase wesentlich kleiner ist als der Hebelarm 31 in Figur 1b, in der die obere Backe 18 in eine Schneidposition 22 übergeführt wurde.

Bei dieser Ausführungsform gemäß dem Stand der Technik ist der Hebelarm 31 in dieser Schneidposition am größten, so dass die wirkende Druckkraft, die in der Längsachse 33 liegt, eine maximale Hebelkraft erzeugt.

Der konstruktive Aufbau der hydraulischen Anbauvorrichtung 11 gemäß den Figuren 1a und b ist bei der erfindungsgemäßen Ausführungsform der Anbauvorrichtung 11 in den Figuren 2a bis c prinzipiell beibehalten. Analoges gilt für eine nicht näher dargestellte alternative Ausführungsform, bei der auch die untere Backe 16 schwenkbeweglich um die Lagerachse 19 gelagert ist, so dass beide Backen 16 und 18 als Schere schwenkbar sind oder die obere Backe 18 feststehend und die untere Backe 16 bewegbar ist.

Die in den Figuren 2a bis c dargestellte Ausführungsform der Anbauvorrichtung 11 weist wie die in den Figuren 1a und 1b eine Maulöffnung 37 auf, welche Schneidspitzen 38 und Scherleisten 39 umfassen. Diese Anbauvorrichtung 11 ist als Schrottschere für die Verschrottung ausgebildet. Alternativ kann, wie auch die Anbauvorrichtung 11 gemäß dem Stand der Technik, eine Kombination aus Schneidwerkezeug 20 und Zermalmwerkzeug oder an der Maulöffnung 37 auch nur ein Zermalmwerkzeug vorgesehen sein. Das Zermalmwerkzeug umfasst bspw. Zermalmzähne.

Bei einer ersten erfindungsgemäßen Ausführungsform der Anbauvorrichtung 11 gemäß den Figuren 2a bis c ist abweichend zur Ausführungsform gemäß Figur 1a und 1b vorgesehen, dass die obere Backe 18 durch einen ersten Hubzylinder 26 und durch zumindest einen weiteren Hubzylinder 41 betätigt wird. Der Hubzylinder 41 greift dabei beispielsweise mit seiner Kolbenstange 42 an einem benachbarten Angriffspunkt 43 zum Angriffspunkt 45 an der Backe 18 an, an welchem die Kolbenstange 32 des Hubzylinders 26 angeordnet ist. Dadurch ergibt sich ein von dem Hebelarm 34 des ersten Hubzylinders 26 abweichender Hebelarm 48 für den Hubzylinder 41 bezogen auf die Lagerachse 19. Des Weiteren ist bei dieser Ausführungsform bevorzugt vorgesehen, dass eine Längsachse 47 des Hubzylinders 41 in einem abweichenden Anstellwinkel 49 zur Längsachse 33 des Hubzylinders 26 angeordnet ist. Der Anstellwinkel der Hubzylinder 26, 41 zur Backe 18 wird durch die Ausrichtung der Längsachse 47 des Hubzylinders 41 bzw. einem Angriffspunkt 44 des Hubzylinders 41 am Gehäuse 12 einerseits und des Angriffspunktes 43 an der schwenkbaren Backe 18 bzw. oberen Backe 18 andererseits bestimmt. Analoges gilt für Hubkolben 26. Die Länge des wirksamen Hebelarms 48 wird durch den Anstellwinkel 49 der Hubzylinder 26, 41 und den Abstand der Angriffspunkte 43, 45 zur Lagerachse 19 festgelegt. Dadurch wird eine einfache Auslegung und Bestimmung einer Anfangsschneidkraft sowie eines Schneidkraftverlaufs über die gesamte Schließbewegung ermöglicht.

Aufgrund der Verwendung von beispielsweise zwei Hubzylindern 26, 41 kann jeder der beiden Hubzylinder 26, 41 kleiner als der im Stand der Technik verwendete Einzelhubzylinder ausgebildet werden. Dies weist den Vorteil auf, dass eine größere Auswahl an Hubzylindern zur Verfügung steht. Darüber hinaus weist diese Anordnung den Vorteil auf, dass eine bessere Kraftverteilung beim Einleiten der Schneidkraft in die obere Backe 18 aufgrund der getrennten Angriffspunkte 43 und 45 einerseits und der getrennten Abstützpunkte der Hubzylinder 26, 41 am Gehäuse 12 gegeben ist. Durch die Anordnung der beispielsweise zwei Hubzylinder 26, 41 kann bei gleichem Volumen an Hydraulikflüssigkeit zur Ansteuerung der Hydraulikzylinder 26, 41 eine größere Schneidkraft zu Beginn der Schneidbewegung aus der Öffnungsposition 21 erzielt werden, da die Summe der Hebelarme 34, 48 bzw. dieser Vektoren gemäß Figur 2a größer als der Hebelarm 31 gemäß Figur 1a beim Stand der Technik ist. Dadurch kann beispielsweise eine Verdopplung der Schneidkraft zu Beginn des Schneidprozesses erzielt werden. Insbesondere ist dies beim Schneiden von Rohren von Vorteil, die einen Durchmesser aufweisen, der im Wesentlichen einer Maulöffnungsweite entspricht. Somit kann bei solchen Anwendungsfällen bereits zu Beginn eine erhöhte Schneidkraft aufgebracht und solche Rohre geschnitten werden.

Nach Einleitung der Schneidbewegung wird die obere Backe 18 in eine Schneidposition 22 übergeführt, wie dies in Figur 2b dargestellt ist. Diese Schneidposition 22 ist dann erreicht, wenn die Schneidspitzen 28 einander gegenüberliegen oder eine Schneidspitze 28 der oberen Backe 18 in die Schneidspitze 28 der unteren Backe 16 eintaucht. In Figur 2c hat die obere Backe 18 die Schließposition 23 eingenommen.

Alternativ kann ebenso vorgesehen sein, dass anstelle der Ausrichtung der Längsachse 33, 47 des ersten Hubzylinders 26 und des zumindest einen weiteren Hubzylinders 41 in einem abweichenden Winkel auch eine parallele Ausrichtung der Längsachse 33, 47 vorgesehen sein kann. Dadurch können die analogen Vorteile erzielt werden. In einigen Fällen kann eine solche Anordnung auch geeignet sein, aufgrund des vorgegebenen Bauraumes.

Alternativ zu der dargestellten Anbauvorrichtung 11 in den Figuren 2a bis 2c kann auch ein dritter Hubzylinder oder weitere Hubzylinder an der oberen Backe 18 angreifen. Je mehr Hubzylinder an der oberen Backe 18 angreifen, desto geringer ist der Abstand zwischen den einzelnen Angriffspunkten 45, 41. Dementsprechend können auch die Anstellwinkel oder der parallele Abstand der einzelnen Hubzylinder zueinander angepasst sein. Dies kann zum einen bedeuten, dass die Längsachsen der an der schwenkbaren Backe 16, 18 angreifenden Hubzylinder 26, 41 alle voneinander abweichen. Ebenso kann vorgesehen sein, dass die Hubzylinder 26, 41 alle parallel zueinander ausgerichtet sind oder aber dass eine Kombination der beiden Ausführungsformen möglich ist, dass heißt das sowohl parallel zueinander ausgerichtete als auch in einem abweichenden Winkel zueinander ausgerichtete Hubzylinder 26, 41 an einer schwenkbaren Backe angreifen können. Andererseits steigt die auf die schwenkbare Backe 18 wirkende Druckkraft.

Unter dem Gehäuse 12 wird sowohl ein geschlossenes Gehäuse verstanden, wie dies in den Figuren 2a bis 2c dargestellt ist, als auch ein offenes Gehäuse, welches beispielsweise in Form eines Tragrahmens oder eines Traggerüsts ausgebildet sein kann.

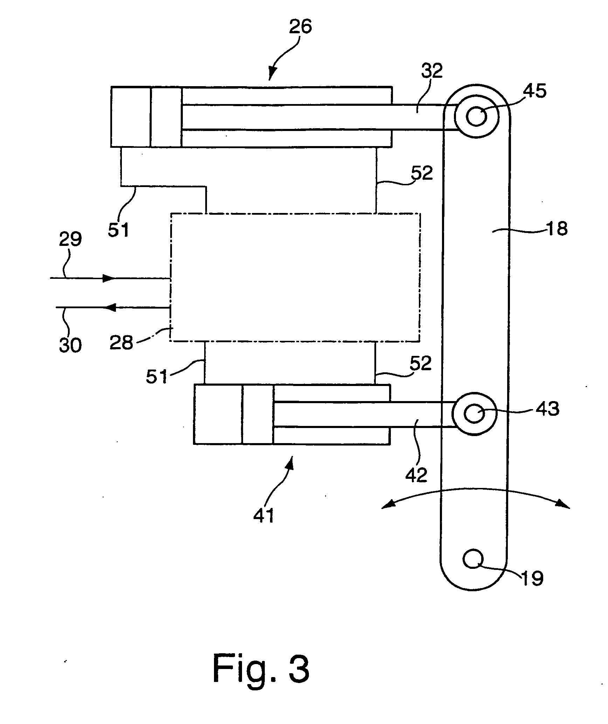

In Figur 3 ist schematisch ein Hydraulikplan der Steuerungseinrichtung 28 zur Ansteuerung der beiden Hubzylinder 26, 41 der Anbauvorrichtung 11 gemäß den Figuren 2 a bis c dargestellt. Über den Zulauf 29 wird die Steuerungseinrichtung 28 mit Hydraulikflüssigkeit zur Einleitung einer Schwenkbewegung versorgt. Von der Steuerungseinrichtung 28 führt an jeden Hubzylinder 26, 41 eine kolbenseitige Verbindungsleitung 51. Ebenso ist zwischen dem Hubzylinder 26, 41 und der Steuerungseinrichtung 28 eine kolbenstangenseitige Verbindungsleitung 52 angeordnet. Die an der schwenkbaren Backe 18 angreifenden Hubzylinder 26, 41 sind parallel geschalten. Die schwenkbare Backe 18, welche um die Lagerachse 19 schwenkbar angesteuert wird, ist in Figur 3 lediglich symbolisch dargestellt. Die Steuerungseinrichtung 28 umfasst zumindest ein nicht näher dargestelltes Ventil. Darüber hinaus können weitere Ventile zur Ansteuerung der Hubzylinder 26, 41 einzeln oder gemeinsam vorgesehen sein, die wahlweise angesteuert werden können.

Durch die Steuerungseinrichtung 28 ist eine flexible Ansteuerung der Hubzylinder 26, 41 möglich. Beispielsweise können gemäß einer ersten Ausführungsform die wenigstens zwei Hubzylinder 26, 41 gleichzeitig mit Druck beaufschlagt werden. Aufgrund dessen, dass die Hubzylinder 26, 41 parallel geschalten sind, behindern sich diese nicht. Ergänzend kann ein Ventil für den Eilgang zugeschalten sein, bis eine Druckkrafterhöhung erfolgt bzw. der Schneidprozess beginnt. Anschließend wird zur weiteren Ansteuerung des Schneidprozesses das Ventil geschlossen. Bei der Öffnungsbewegung der schwenkbaren Backe 18 in eine Öffnungsposition 21 kann bspw. nur einer der beiden Hubzylinder 26, 41 mit Druck beaufschlagt werden. Ergänzend kann auch ein Eilgangventil sowohl für eine Öffnungsbewegung des Zylinders als auch für zumindest eine erste Phase einer Schließbewegung zugeschalten werden, um kurze Zykluszeiten zu erzielen. Dabei wird beispielsweise die Hydraulikflüssigkeit von einer stangenseitigen Kammer in eine kolbenseitige Kammer oder umgekehrt zugeführt. Bei Erreichen eines bestimmten Druckes wird das Eilgangventil geschlossen.

Des Weiteren kann für die Ansteuerung einer Schließbewegung vorgesehen sein, dass zunächst der Hydraulikzylinder 26 oder der Hydraulikzylinder 41 mit Druck, insbesondere über zumindest ein Ventil, beaufschlagt wird, bis eine Schneidkrafterhöhung spürbar wird, so dass dann der weitere Hubzylinder 26, 41 über ein Ventil zugschalten wird, um die erhöhte Schneidkraft aufzubringen. Dies weist den Vorteil auf, dass zuvor eine schnelle Schließbewegung ermöglicht ist. Die Öffnungsbewegung wird bevorzugt nur mit einem Hubzylinder 26 oder 41, insbesondere über ein oder mehrere Ventile, angesteuert, um eine schnelle Öffnungszeit bzw. Rückführung der oberen Backe 18 in eine Öffnungsposition 21 zu ermöglichen.

Analoges gilt bei Ausführungsformen, die zwei oder mehrere Hubzylinder zur Ansteuerung der schwenkbaren Backe 18 umfassen, die mit ihrer Längsachse parallel zueinander und/oder in einem abweichenden Anstellwinkel zueinander angeordnet sind.

## Patentansprüche

1. Verfahren zur Ansteuerung einer hydraulischen Anbauvorrichtung (11) zum Scheren oder Zermalmen von Strukturen, insbesondere für den Abbruch, die Zerkleinerung oder für das Recycling, welche eine obere und eine untere Backe (18, 16) aufweist, von denen zumindest eine schwenkbar an einer Lagerachse (19) am Gehäuse (12) gelagert ist,
- bei dem die schwenkbare Backe (16, 18) durch einen ersten Hubzylinder (26), der an einem ersten Angriffspunkt (45) der schwenkbaren Backe (16, 18) angreift und zumindest einen weiteren daran angreifenden Hubzylinder (41) aus einer Öffnungsposition (21) in eine Schneidposition (22) oder eine Schließposition (23) und zurück bewegbar angesteuert wird, wobei der erste und zumindest eine weitere Hubzylinder (26, 41) mit einem voneinander abweichenden Hebelarm zur Krafteinleitung an der schwenkbaren Backe (16, 18) angreifen, **dadurch gekennzeichnet,**
- **dass** für eine Schließbewegung der zumindest einen schwenkbaren Backe (16, 18) zunächst nur derjenige Hubzylinder (26, 41) angesteuert wird, der in einer ersten Schließphase eine höhere Schließgeschwindigkeit und/oder einem größeren Hebelarm als der zumindest eine weitere Hubzylinder (26, 41) aufweist und in einer weiteren Schließphase, bei welcher eine Druckkrafterhöhung erfolgt, der zumindest eine weitere Hubzylinder (26, 41) zugeschalten und angesteuert wird, so dass zu diesem Zeitpunkt der Schließbewegung eine erhöhte Schließkraft erzeugt wird.

2. Verfahren nach Anspruch 1, **dadurch gekennzeichnet, dass** der oder die Hubzylinder (26, 41) für eine Öffnungsbewegung oder Schließbewegung der zumindest einen schwenkbaren Backe (16, 18) über zumindest ein Ventil einer hydraulischen Steuerung (28) angesteuert wird oder werden.

3. Verfahren nach einem der vorhergehenden Ansprüche, **dadurch gekennzeichnet, dass** der zumindest eine weitere Hubzylinder (41) während einer Schließbewegung der zumindest einen schwenkbaren Backe (16, 18) als Dämpfungszylinder angesteuert wird, der dem zumindest einen die Schließbewegung durchführenden Hubzylinder (26) entgegenwirkt.

4. Hydraulische Anbauvorrichtung zum Scheren oder Zermalmen von Strukturen, insbesondere für den Abbruch, für die Zerkleinerung oder für das Recycling
- welche an einen Ausleger und an ein hydraulisches System eines Trägergerätes anschließbar ist,
- mit einem Gehäuse (12) und mit einer Anschlussschnittstelle (14),
- mit einer oberen Backe (18) und einer unteren Backe (16), wobei zumindest eine der beiden Backen (16, 18) schwenkbar um eine an dem Gehäuse (12) gelagerte Lagerachse (19) angeordnet ist und
- mit einem ersten, an der schwenkbaren Backe (16, 18) in einen ersten Angriffspunkt (45) angreifenden Hubzylinder (26), der sich mit seinem gegenüberliegenden Ende an dem Gehäuse (12) abstützt,
mit zumindest einem weiteren an der schwenkbaren Backe (16, 18) angreifenden Hubzylinder (41), wobei die zumindest zwei Hubzylinder (26, 41) mit einem von einander abweichenden Hebelarm (34, 48) an der schwenkbaren Backe (16, 18) angreifen, und die Backen (16, 18) eine Maulöffnung (37) bilden, **dadurch gekennzeichnet**
- **dass** die Angriffspunkte (43, 45) der Hubzylinder (26, 41) bezogen auf die Lagerachse (19) gegenüberliegend der Maulöffnung an der schwenkbaren Backe (16, 28) angeordnet sind.

5. Anbauvorrichtung nach Anspruch 4, **dadurch gekennzeichnet, dass** an der schwenkbaren Backe (16, 18) der zumindest eine weitere Hubzylinder (41) an einem weiteren Angriffspunkt (43) daran angreift und dass ein Abstand des ersten Hubzylinders (26) zwischen dem ersten Angriffspunkt (45) und einer Lagerachse (19) an der schwenkbaren Backe (16, 18) von einem Abstand zwischen dem weiteren Angriffspunkt (43) zur Lagerachse (19) des weiteren Hubzylinders (41) voneinander verschieden ist.

6. Anbauvorrichtung nach Anspruch 4, **dadurch gekennzeichnet, dass** an der schwenkbaren Backe (16, 18) zumindest ein weiterer Hubzylinder (41) angreift, dessen Längsachse (47) in einem zur Längsachse (33) des ersten Hubzylinders (26) abweichenden Anstellwinkel (49) angeordnet ist.

7. Anbauvorrichtung nach Anspruch 4, **dadurch gekennzeichnet, dass** ein Angriffspunkt (43) des zumindest einen weiteren Hubzylinders (41) in einem Angriffspunkt (45) des ersten Hubzylinders (26) liegt.

8. Anbauvorrichtung nach Anspruch 4, **dadurch gekennzeichnet, dass** an der schwenkbaren Backe (16, 18) zumindest ein weiterer Hubzylinder (41) angreift, dessen Längsachse (47) parallel zur Längsachse (33) des ersten Hubyzlinders (26) angeordnet ist.

9. Anbauvorrichtung nach Anspruch 4 bis 8, **dadurch gekennzeichnet, dass** sich der erste und zumindest eine weitere Hubzylinder (41) am Gehäuse (12) abstützen oder dass der erste und zumindest eine weitere Hubzylinder (26, 41) mit den jeweiligen Kolbenstangen (32, 42) an der schwenkbaren Backe (16, 18) oder am Gehäuse (12) angreifen.

10. Anbauvorrichtung nach einem der Ansprüche 4 bis 9, **dadurch gekennzeichnet, dass** der Anstellwinkel (49) des ersten Hubzylinders (26) in einer Öffnungsposition (21) der schwenkbaren Backe (18) einen größeren Hebelarm (43) als ein Hebelarm (48) des zumindest einen weiteren Hubzylinders (41) aufweist.

11. Anbauvorrichtung nach einem der Ansprüche 4 bis 10, **dadurch gekennzeichnet, dass** die an der schwenkbaren Backe (18) angreifenden Hubzylinder (26, 41) parallel mit Druck beaufschlagbar sind und vorzugsweise zwischen einer hydraulischen Steuereinrichtung (28) und dem ersten und zumindest einen weiteren Hubzylinder (26, 41) jeweils eine kolbenseitige Verbindungsleitung (51) und eine kolbenstangenseitige Verbindungsleitung (52) vorgesehen ist.

12. Anbauvorrichtung nach einem der Ansprüche 4 bis 11, **dadurch gekennzeichnet, dass** die Summe der Zylindervolumen der Hubzylinder (26, 41), welche an der schwenkbaren Backe (16, 18) angreift, kleiner oder gleich dem maximalen Fördervolumen des hydraulischen Systems ist.

13. Anbauvorrichtung nach einem der Ansprüche 4 bis 12, **dadurch gekennzeichnet, dass** die an der schwenkbaren Backe (16, 18) angreifenden Hubzylinder (26, 41) unterschiedliche Kolbendurchmesser aufweisen.

## Claims

1. A method of activating a mountable hydraulic appliance (11) for the shearing or crushing of structures, in particular for demolition, comminution or recycling, which has an upper jaw and a lower jaw (18, 16) at least one of which is pivotally hinged on a bearing axis (19) arranged on the housing (12),
- wherein the hinged jaw (16, 18) is activated by a first hydraulic cylinder (26) acting on a first acting point (45) of the hinged jaw' (16, 18) and by at least one further hydraulic cylinder (41) acting thereon so as to be moved from an open position (21) to a cutting position (22) and/or a closed position (23) and vice versa, both the first and the at least one further hydraulic cylinders (26, 41) acting on the hinged jaw (16, 18) using lever arms for force introduction which differ from each other, **characterised in**
- **that** for a closing movement of the at least one hinged jaw (16, 18) is such that initially only the one of the hydraulic cylinders (26, 41) is activated which in a first closing phase has a higher closing speed and/or a greater lever arm than the at least one further hydraulic cylinder (26, 41), and that in an ulterior phase of the closing movement, in which an increase in required compression force takes place, the at least one further hydraulic cylinder (26, 41) is additionally activated, such that at that point in time during the closing movement an increased closing force is generated

2. The method as claimed in claim 1, **characterised in that** the hydraulic cylinder(s) (26, 41) is (are) activated via at least one valve of a hydraulic control device (28) so as to perform an opening movement or a closing movement of the at least one hinged jaw (16, 18).

3. The method as claimed in any one of the preceding claims, **characterised in that** the at least one further hydraulic cylinder (41) is activated, during a closing movement of the at least one hinged jaw (16, 18), as a damping cylinder counteracting the at least one hydraulic cylinder (26) which performs said closing movement.

4. A mountable hydraulic appliance for the shearing or crushing of structures, in particular for demolition, comminution or recycling,
- which is attachable to a boom and to a hydraulic system of a carrier apparatus,
- having a housing (12) and a coupling interface (14),
- having an upper jaw (18) and a lower jaw (16), at least one of the two jaws (16, 18) being pivotally hinged on a bearing axis (19) arranged on the housing (12), and
- having a first hydraulic cylinder (26) acting on the hinged jaw (16, 18) in a first acting point (45) and abutting with its opposite end against the housing (12),
- having at least one further hydraulic cylinder (41) acting upon the hinged jaw (16, 18) **characterised in**
- **that** the at least two hydraulic cylinders (26, 41) act on the hinged jaw (16, 18) using lever arms (34, 48) differing from one another, and the jaws (16, 18) creating a mouth opening (37)
- **that** the acting points (43, 45) of the hydraulic cylinder (26, 41) are provided opposite to each other on the hinged jaw (16, 18) with respect to the bearing axis of the mouth opening.

5. The mountable appliance as claimed in claim 4, **characterised in that** the at least one further hydraulic cylinder (41) acts on the hinged jaw (16, 18) in a further acting point (43) and that a distance between the first acting point (45) of the first hydraulic cylinder (26) and a bearing axis (19) on the hinged jaw (16, 18) differs from a distance between the further acting point (43) of the further hydraulic cylinder (41) and said bearing axis (19).

6. The mountable appliance as claimed in claim 4, **characterised in that** the hinged jaw (16, 18) is acted upon by at least one further hydraulic cylinder (41) the longitudinal axis (47) of which is arranged at an angle of attack (49) that is divergent from that of the longitudinal axis (33) of the first hydraulic cylinder (26).

7. The mountable appliance as claimed in claim 4, **characterised in that** an acting point (43) of the at least one further hydraulic cylinder (41) coincides with an acting point (45) of the first hydraulic cylinder (26).

8. The mountable appliance as claimed in claim 4, **characterised in that** the hinged jaw (16, 18) is acted upon by at least one further hydraulic cylinder (41) the longitudinal axis (47) of which is arranged parallel with the longitudinal axis (33) of the first hydraulic cylinder (26).

9. The mountable appliance as claimed in claims 4 to 8, **characterised in that** the first hydraulic cylinder and the at least one further- hydraulic cylinder (41) abut against the housing (12) or that the first and the at least one further hydraulic cylinders (26, 41), with their respective piston rods (32, 42), act on the hinged jaw (16, 18) or on the housing (12).

10. The mountable appliance as claimed in any one of claims 4 to 9, **characterised in that** the angle of attack (49) of the first hydraulic cylinder (26) has a lever arm (43) which is greater than a lever arm (48) of the at least one further hydraulic cylinder (41) when the hinged jaw (18) is in an open position (21).

11. The mountable appliance as claimed in any one of claims 4 to 10, **characterised in that** the hydraulic cylinders (26, 41) acting upon the hinged jaw (18) are pressurisable in parallel and that preferably a piston-side connection line (51) and a piston-rod-side connection line (52) are provided between a hydraulic control device (28) and both the first and the at least one further hydraulic cylinders (26, 41), respectively.

12. The mountable appliance as claimed in claims 4, 6 to 11, **characterised in that** the sum of the cylinder volumes of the hydraulic cylinders (26, 41) acting upon the hinged jaw (16, 18) is less than or equal to the maximum delivery volume of the hydraulic system.

13. The mountable appliance as claimed in any one of claims 4, 6 to 12, **characterised in that** the hydraulic cylinders (26, 41) acting upon- the hinged jaw (16, 18) have differently dimensioned piston diameters.

## Revendications

1. Procédé destiné à commander un dispositif hydraulique rapporté (11) permettant de cisailler ou de broyer des structures, notamment pour la démolition, le concassage ou pour le recyclage, lequel présente une mâchoire supérieure et une mâchoire inférieure (18, 16) dont l'une au moins est montée de manière à pouvoir pivoter sur un axe de palier (19) situé sur le boîtier (12),
- dans lequel la mâchoire pivotante (16, 18) est commandée par un premier vérin (26) qui appuie sur un premier point d'application (45) de la mâchoire pivotante (16, 18) et par au moins un autre vérin (41) appuyant contre cette dernière de manière à la faire passer d'une position d'ouverture (21) à une position de coupe (22) ou à une position de fermeture (23) et inversement, le premier et ledit au moins un autre vérin (26, 41) appuyant, pour l'application de la force, contre la mâchoire pivotante (16, 18) au moyen d'un bras de levier respectif différent l'un de l'autre, **caractérisé en ce que**
- pour réaliser un mouvement de fermeture de ladite au moins une mâchoire pivotante (16, 18), seul est d'abord commandé le vérin (26, 41) qui présente, dans une première phase de fermeture, une vitesse de fermeture supérieure et/ou un bras de levier plus long que ledit au moins un autre vérin (26, 41) et **en ce que**, dans une phase de fermeture suivante lors de laquelle s'exerce une force de pression accrue, ledit au moins un autre vérin (26, 41) entre en action et est commandé de manière à ce qu'au moment-même dudit mouvement de fermeture soit générée une force de fermeture accrue.

2. Procédé selon la revendication 1, **caractérisé en ce que** le vérin ou les vérins (26, 41) est ou sont commandé(s) par au moins une soupape d'une commande hydraulique (28) pour réaliser un mouvement d'ouverture ou de fermeture de ladite au moins une mâchoire pivotante (16, 18).

3. Procédé selon l'une quelconque des revendications précédentes, **caractérisé en ce que** ledit au moins un autre vérin (41) est commandé, pendant un mouvement de fermeture de ladite au moins une mâchoire pivotante (16, 18), en tant que vérin amortisseur qui agit en sens contraire dudit au moins un vérin (26) qui effectue le mouvement de fermeture.

4. Dispositif hydraulique rapporté permettant de cisailler ou de broyer des structures, notamment pour la démolition, pour le concassage ou pour le recyclage
- qui peut être monté sur une flèche et raccordé à un système hydraulique d'un engin porteur,
- avec un boîtier (12) et une interface de raccordement (14),
- avec une mâchoire supérieure (18) et une mâchoire inférieure (16), au moins l'une des deux mâchoires (16, 18) étant disposée de manière à pouvoir pivoter sur un axe de palier (19) monté sur le boîtier (12), et
- avec un premier vérin (26) qui appuie contre la mâchoire pivotante (16, 18) sur un premier point d'application (45) et dont l'extrémité opposée prend appui contre le boîtier (12),
avec au moins un autre vérin (41) qui appuie contre la mâchoire pivotante (16, 18), lesdits au moins deux vérins (26, 41) appuyant contre la mâchoire pivotante (16, 18) au moyen d'un bras de levier respectif (34, 38) de longueur différente et les mâchoires (16, 18) formant une ouverture de mâchoire (37), **caractérisé en ce que**
- les points d'application (43, 45) des vérins (26, 41) sont disposés, par rapport à l'axe de palier (19), à l'opposé de l'ouverture de mâchoire, sur la mâchoire pivotante (16, 18).

5. Dispositif rapporté selon la revendication 4, **caractérisé en ce que** ledit au moins un autre vérin (41) appuie sur un autre point d'application (43) situé sur la mâchoire pivotante (16, 18), et **en ce qu'**un écart existant entre le premier point d'application (45) du premier vérin (26) et un axe de palier (19) situé sur la mâchoire pivotante (16, 18) est différent d'un écart séparant l'autre point d'application (43) de l'autre vérin (41) de l'axe de palier (19).

6. Dispositif rapporté selon la revendication 4, **caractérisé en ce que** contre la mâchoire pivotante (16, 18) appuie au moins un autre vérin (41) dont l'axe longitudinal (47) est disposé dans un angle d'incidence (49) différent de celui de l'axe longitudinal (33) du premier vérin (26).

7. Dispositif rapporté selon la revendication 4, **caractérisé en ce qu'**un point d'application (43) dudit au moins un autre vérin (41) coïncide avec un point d'application (45) du premier vérin (26).

8. Dispositif rapporté selon la revendication 4, **caractérisé en ce que** contre la mâchoire pivotante (16, 18) appuie au moins un autre vérin (41) dont l'axe longitudinal (47) est disposé parallèlement à l'axe longitudinal (33) du premier vérin (26).

9. Dispositif rapporté selon l'une quelconque des revendications 4 à 8, **caractérisé en ce que** le premier vérin et ledit au moins un autre vérin (41) prennent appui contre le boîtier (12), ou **en ce que** le premier vérin et ledit au moins un autre vérin (26, 41) appuient avec les tiges de piston respectives (32, 42) contre la mâchoire pivotante (16, 18) ou contre le boîtier (12).

10. Dispositif rapporté selon l'une quelconque des revendications 4 à 9, **caractérisé en ce que** l'angle d'incidence (49) du premier vérin (26) présente, alors que la mâchoire pivotante (18) se trouve dans une position d'ouverture (21), un bras de levier (43) plus long qu'un bras de levier (48) dudit au moins un autre vérin (41).

11. Dispositif rapporté selon l'une quelconque des revendications 4 à 10, **caractérisé en ce que** les vérins (26, 41) appuyant contre la mâchoire pivotante (18) peuvent être mis parallèlement sous pression, et **en ce que** de préférence entre un dispositif de commande hydraulique (28) et le premier ainsi que ledit au moins un autre vérin (26, 41) sont prévues respectivement une ligne de connexion (51) côté piston et une ligne de connexion (52) côté tige de piston.

12. Dispositif rapporté selon l'une quelconque des revendications 4 à 11, **caractérisé en ce que** la somme des volumes des vérins (26, 41) qui appuie contre la mâchoire pivotante (16, 18) est inférieure ou égale au volume maximum de service du système hydraulique.

13. Dispositif rapporté selon l'une quelconque des revendications 4 à 12, **caractérisé en ce que** les vérins (26, 41) appuyant contre la mâchoire pivotante (16, 18) présentent des diamètres de piston différentes.
